# EUROPEAN PATENT SPECIFICATION

(11) **EP 0 736 054 B1**
(45) Date of publication and mention of the grant of the patent: **27.03.2002**
(21) Application number: 95906034.4
(22) Date of filing: 20.12.1994
(51) Int. Cl.: C08G 69/44, C08G 69/32, C08G 63/685, C08G 63/00, B32B 19/00

(54) **THERMOTROPIC POLY(ESTERAMIDE)S CONTAINING MONOMER UNITS DERIVED FROM 4,4'-BIPHENYLDICARBOXYLIC ACID**
THERMOTROPE POLY(ESTERAMIDE)E ENTHALTENDE MONOMEREINHEITEN ABGELEITET AUS 4,4'-BIPHENYLDICARBONSÄURE
POLY(ESTERAMIDE)S THERMOTROPES CONTENANT DES UNITES MONOMERES DERIVEES DE L'ACIDE 4,4'-BIPHENYLDICARBOXYLIQUE

(30) Priority: 23.12.1993 US 172408
(43) Date of publication of application: 09.10.1996
(73) Proprietor: HOECHST CELANESE CORPORATION, Somerville, New Jersey 08876 (US)
(72) Inventor: GUPTA, Balaram, North Plainfield, NJ 07060 (US); HATKE, Wilfried, D-65719 Hofheim (DE); SHEPHERD, James, P., Springfield, NJ 07081 (US); SAWYER, Linda, C., Chatham, NJ 07928 (US)
(74) Representative: von Kreisler, Alek, Dipl.-Chem.
(86) International application number: US9414683
(87) International publication number: WO9517446

(56) References cited:
- US-A- 4 339 375
- US-A- 4 351 918
- US-A- 4 355 132
- US-A- 4 539 386
- US-A- 4 720 424

## Description

### Field of the Invention

This invention relates generally to thermotropic liquid crystalline polymers, and more specifically to thermotropic liquid crystalline poly(esteramide)s that contain 4,4'-biphenyldicarboxylic acid.

### Background of the Invention

Thermotropic liquid crystalline polymers are a well known class of polymeric materials. They have high thermal stability and excellent mechanical properties when they are shaped into such articles as fibers, films and molded parts. Several thermotropic liquid crystalline polymer compositions are manufactured and sold commercially.

There is a continuing need for new liquid crystalline polymers that have higher thermal properties, impact strength, and tensile properties and that are readily processed in the melt without extensive decomposition.

Thermotropic liquid crystalline polymers that contain monomer units derived from 4,4'-biphenyldicarboxylic acid are known but have not been investigated as thoroughly as compositions containing other monomer units. For example, polyesters containing this monomer unit have been reported in U. S. Patent Nos. 5,055,546, 5,071,942 and 5,250,654. There are also numerous thermotropic poly(esteramide) compositions, such as those reported in U. S. Patent Nos. 5,204,443, 4,330,457, 4,966,956, 4,355,132, 4,339,375, 4,351,917 and 4,351,918. However, it appears that there are no reports of poly(esteramide)s that contain monomer units derived from 4,4'-biphenyldicarboxylic acid and aromatic amines.

### Summary Of the Invention

Thermotropic liquid crystalline poly(esteramide)s have now been found that comprise monomer units A, B, C, and D, where A is 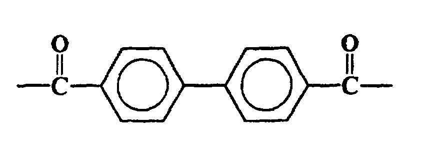 and optionally the dioyl residue of one or more other aromatic diacids selected from the group consisting of terephthalic acid and isophthalic acid; B is the dioxy residue of one or more aromatic diols selected from 1,4-hydroquinone, 4,4'-biphenol, 2,6-dihydroxynaphthalene and 2,7-dihydroxynaphthalene; C is 4-oxybenzoyl and D is 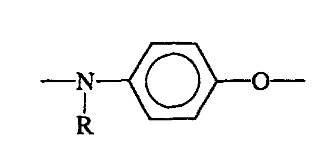 wherein some or all of the aromatic groups of monomer units A, B, C, and D may optionally be substituted with one or more of the following moieties: F, Cl, Br, I, and C₁ to C₄ alkyl groups which may be partially or fully substituted with Cl, F, or mixtures of Cl and F. This poly(esteramide) comprises on a molar basis 1 to 45% of monomer unit A, 1 to 45% of monomer unit B, 10 to 95% of monomer unit C, and 1 to 30% of monomer unit D. The thermotropic poly(esteramide) is capable of forming a liquid crystalline melt at a temperature that is greater than or equal to 200°C and less than or equal to 400°C. These thermotropic poly(esteramide)s are readily processed in the melt to yield fibers having high modulus and strength. They are also readily injection molded to yield shaped articles having excellent tensile properties, flexural properties, and impact properties, as shown by a high notched Izod impact strength. The molded and shaped articles also have excellent thermal stability, as demonstrated by a high heat distortion temperature under load.

### Detailed Description Of The Invention

A is the dioyl residue of 4,4'-biphenyldicarboxylic acid, i.e. 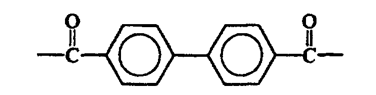 and may also include the dioyl residue of one or more optional other diacids selected from terephthalic acid and isophthalic acid. Monomer unit B is the dioxy residue of one or more of the following diols: 1,4-hydroquinone, 4,4'-biphenol, 2,6-dihydroxynaphthalene, and 2,7-dihydroxynaphthalene. Monomer unit C is the oxyaroyl residue of 4-hydroxybenzoic acid. Monomer unit D is the esteramide monomer unit that is derived from 4-aminophenol, i.e.,

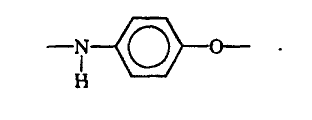

Preferred thermotropic poly(esteramide)s comprise on a molar basis 3 to 30% of monomer unit A, 3 to 30% of monomer unit B, 40 to 90% of monomer unit C, and 1 to 20% of monomer unit D. In more preferred embodiments, the thermotropic aromatic poly(esteramide) comprises on a molar basis 10 to 30% of monomer unit A, 5 to 25% of monomer unit B, 50 to 80% of monomer unit C, and 5 to 15% of monomer unit D. In the descriptions of polymer compositions recited above and elsewhere, monomer units are expressed as a mole % of the entire polymer composition, and quantities of monomers used in their preparation are expressed as a mole % of all the monomers used in making the polymer, unless otherwise stated.

As previously stated, the compositions taught herein yield a liquid crystalline melt at some temperature in the range of 200°C to 400°C. More preferred polymers have a melting point at some temperature in the range of 250°C to 375°C.

Highly preferred polymers comprise monomer units A, B, C, and D, where A is 4,4'-biphenyldicarbonyl, which is 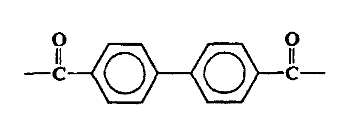 and optional terephthaloyl, with the terephthaloyl comprising up to 25 mole % of the polymer. Monomer unit B is the dioxy residue of 4,4'-biphenol, alone or in combination with up to 20 mole % of the dioxy residue of 1,4-hydroquinone, expressed as a mole % of the polymer. Monomer unit C in this composition is 4-oxybenzoyl. Monomer unit D is the esteramide residue of 4-aminophenol.

Finally, specific compositions have been found to have an excellent combination of properties, when molded into test specimens containing glass fiber. One specific polymer comprises monomer units A, B, C, and D, where monomer unit A is a mixture of 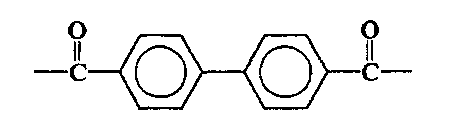 and terephthaloyl, each at a level of 2 to 25 mole % of the polymer; monomer unit B is the dioxy residue of 4,4'-biphenol; monomer unit C is 4-oxybenzoyl; and monomer unit D is the esteramide residue of 4-aminophenol. These polymers have an excellent combination of tensile properties, flexural properties, and impact properties (notched Izod) when they are filled with 30% by weight of glass fiber and are injection molded.

The invention also comprises a method of synthesizing a thermotropic aromatic poly(esteramide) which forms a liquid crystalline melt at some temperature in the range of 200°C to 400°C. In this method, monomers A, B, C, and D are condensed in the following amounts on a mole basis: 1 to 45% each of monomers A and B, 10 to 95% of monomer C, and 1 to 30% of monomer D. Monomer A is 4,4'-biphenyldicarboxylic acid and optionally one or more aromatic diacids selected from the group consisting of terephthalic acid, isophthalic acid, or reactive derivatives thereof. Monomer B is one or more aromatic diols selected from the group consisting of 1,4-hydroquinone, 4,4'-biphenol, 2,6-dihydroxynaphthalene and 2,7-dihydroxynaphthalene, or reactive derivatives thereof. Monomer C is 4-hydroxybenzoic acid including reactive derivatives. Monomer D is one or more aromatic hydroxyamines or reactive derivatives thereof, selected from 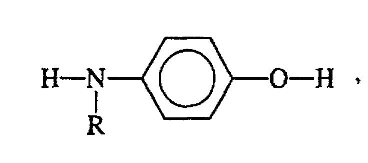 where R is H. Some or all of the aromatic groups of the monomers A, B, C, and D may optionally be substituted with F, Cl, Br, I, and C₁ to C₄ alkyl groups that may optionally be partially or fully substituted with Cl, F, and mixtures thereof. Monomers A, B, C and D are condensed to yield a poly(esteramide) having an inherent viscosity of at least 3.0 dl/g, and preferably about 5 dl/g, when measured at about 25°C as a 0.1% solution on a weight/volume basis in a mixture of equal volumes of pentafluorophenol and hexafluoroisopropanol.

In a preferred method of synthesizing a thennotropic aromatic poly(esteramide), monomer C is 4-hydroxybenzoic acid, and monomer D is 4-aminophenol. Reactive derivatives of these monomers may also be used. The aromatic poly(esteramide) is made by condensing on a mole basis 3 to 30% each of monomers A and B, 40 to 90% of monomer C, and 1 to 20% of monomer D. More preferably, the aromatic poly(esteramide) is made by condensing on a mole basis 10 to 30% of monomer A, 5 to 25% of monomer B, 50 to 80% of monomer C, and 5 to 15 % of monomer D.

More preferred polymers are made by condensing monomers A, B, C, and D, or reactive derivatives thereof, where A is 4,4'-biphenyldicarboxylic acid, optionally including up to 25 mole % terephthalic acid, expressed as a mole % of all the monomers; B is 4,4'-biphenol, optionally including up to 20 mole % of 1,4-hydroquinone, expressed as a mole % of all the monomers; C is 4-hydroxybenzoic acid, and D is 4-aminophenol.

A highly preferred aromatic poly(esteramide) with excellent properties is made by condensing monomers A, B, C, and D, or reactive derivatives thereof, where A comprises 2 to 25 mole % each of 4,4'-biphenyldicarboxylic acid and terephthalic acid expressed as a mole % of all the monomers; B is 4,4'-biphenol; C is 4-hydroxybenzoic acid; and D is 4-aminophenol.

The condensation step referred to above can be carried out according to any of the methods commonly used in the art, including the following: interfacial polymerization; the reaction of preformed phenyl esters of the aromatic acid groups with the phenolic groups to yield polyester linkages and by-product phenol; and melt acidolysis polymerization, which is the preferred method. All of these polymerization methods involve the condensation of reactive derivatives of the monomers rather than the free monomers, since the aromatic phenols and acids do not polymerize well.

In melt acidolysis polymerization, the phenolic reactants are acetylated to yield phenyl acetate groups, and these are then heated in the melt with the aromatic acids to yield acetic acid and polyester linkages. This method is described in numerous patents including U. S. Patent No. 4,473,682. The melt acidolysis method is most conveniently carried out by combining the reactants with acetic anhydride to acetylate the phenolic groups of the reactants in situ and then heating the acetylated monomers to a high enough temperature to induce polymerization. The melt acidolysis method is also useful for aromatic amines, which are generally charged to the reaction as N-acetyl derivatives rather than being acetylated in situ. Thus, the preferred aromatic amine, 4-aminophenol, is generally charged to the polymerization reaction as N-acetyl-4-aminophenol (also referred to as 4-hydroxyacetanilide). Examples of methods of synthesizing aromatic poly(esteramide)s by this method can be found in numerous references, such as U. S. Patent Nos. 5,204,443, 4,330,457, 4,966,956, 4,355,132, 4,339,375, 4,351,917 and 4,351,918.

The polymerization reaction is carried out until the polymer reaches a useful molecular weight, as indicated by the inherent viscosity measured at 25°C of a 0.1% solution on a weight/volume basis in a mixture of equal volumes of pentafluorophenol and hexafluoroisopropanol. The inherent viscosity of the polymer is at least 3.0 dl/g, and preferably at least 5 dl/g.

The polymers made according to this invention are useful as shaped articles, such as fibers, films and molded articles. When the thermotropic poly(esteramide)s are used as resins for injection molding, they are generally blended with fillers and other additives at levels up to 70% by weight in order to achieve optimum properties. Fillers and additives that may be useful include one or more fillers or reinforcing agents selected from the following list, which is not a complete or exhaustive list: glass fiber, calcium silicate, silica, clays, talc, mica, polytetrafluoroethylene, graphite, alumina trihydrate, sodium aluminum carbonate, barium ferrite, wollastonite, carbon fiber, polymeric fiber, aluminum silicate fiber, titanium fiber, rock wool fiber, steel fiber, tungsten fiber, and wollastonite fiber. Other kinds of additives that may be used in addition to fillers and reinforcing agents include oxidation stabilizers, heat stabilizers, light stabilizers, lubricants, mold release agents, dyes, pigments, and plasticizers.

The shaped articles made by injection molding have excellent tensile properties, flexural properties and impact properties. The fibers and films also have excellent mechanical properties, making them useful in applications where high strength is needed.

This invention is further illustrated by the following non-limiting examples.

### Example 1

In a 2 liter glass tubular reactor immersed in a sand bath, equipped with a Vigreaux column and condenser, nitrogen inlet, thermocouple, and a "C"-shaped 316 stainless steel mechanical stirrer were placed (a) 414 grams (3.0 moles) of 4-hydroxybenzoic acid (HBA), (b) 181.5 grams (0.75 moles) of 4,4'-biphenyldicarboxylic acid (BDA), (c) 41.5 grams (0.25 moles) of terephthalic acid (TA), (d) 139.5 grams (0.75 moles) of 4,4'-dihydroxybiphenyl (BP), (e) 37.8 grams (0.25 moles) of 4-hydroxyacetanilide (APAP), (f) 0.108 grams of potassium acetate and (g) 502.1 grams of acetic anhydride (99% purity, 4.87 moles) under a constant purge of nitrogen (30-40 cc/min). The reactor was heated in stages using a MicRIcon® control unit to run the following temperature profile: (1) 1 minute at 25°C; (2) 50 minutes to 125 °C; (3) 40 minutes to 140°C; (4) 20 minutes to 150°C; (5) 45 minutes to 200°C; (6) 5 minutes to 210°C; (7) 6 minutes to 220°; (8) 50 minutes to 275°C; (9) 80 minutes to 310°C; (10) 25 minutes to 335°C; (11) 25 minutes to 360°C; (12) 15 minutes at 360°C; and (13) 120 minutes at 360°C. In the above temperature profile, steps 1, 12 and 13 are isothermal. In the other steps, the temperature was raised from the temperature at the end of the previous step to the new specified temperature during the specified time. The reaction mixture was kept under nitrogen flow until the end of step 12 of the temperature profile above. At this time, 96-98% of the theoretical yield of acetic acid had been collected. The nitrogen was then turned off and the reactor was evacuated to about 30 mbar over a period of 30 minutes. D ing this time the torque of the stirrer started to rise. The reaction was stopped when the increase in torque required an increase of 30 mV to the stirrer. The reactor was then cooled to room temperature and broken to obtain the polymer. The polymer was cut into small cubes and ground.

The polymer had an inherent viscosity (I.V.) of 6.97 dl/g when measured in a mixture of pentafluorophenol (50 vol.%) and hexafluoroisopropanol (50 vol.%) at a concentration of 0.1% (w/v) and at a temperature of 25°C. The melting temperature (Tₘ), heat of melting (ΔHₘ), crystallization temperature on cooling from the molten state (T_{c}), and heat of crystallization (ΔH_{c}) were found to be 315°C, 2.4 joules/gram, 270°C, and -2.3 joules/gram respectively as determined by differential scanning calorimetry (DSC; 20°C/min heating rate). The melt viscosity of the polymer, measured in a capillary viscometer at 360°C at a shear rate of 1000 sec⁻¹, was 320 poise. These properties are summarized in Table 1.

The molten polymer was extruded at 350°C through a single hole spinneret (0.005 inch diameter and 0.007 inch length) at a rate of 0.45 g/min. The extruded filament was drawn down at a speed of 800 meters/minute and quenched in air at ambient conditions (ca. 25 °C and 65% relative humidity). The tensile properties of the as-spun fiber were measured using ASTM test method D-3822: tenacity, 7.7 gms per denier (gpd); modulus, 540 gpd; elongation at break, 1.5%. The fiber was heat treated in an unstressed state at 300°C for 8 hours under nitrogen. The resulting tensile properties were: tenacity, 14.7 gpd; modulus, 630 gpd; elongation, 2.1%.

### Examples 2-12

Other polymers were synthesized, processed and tested using substantially the same conditions as in example 1, with the exception of the monomer ratios of terephthalic acid, 4,4'-dihydroxybiphenyl and 4-hydroxyacetanilide. The amount of acetic anhydride needed for the acetylation was also adjusted accordingly. Most experiments were carried out on a 5-mole scale, but Example 12 was carried out on a larger scale (4 liter flask, 10 moles), where the amounts of monomer and chemicals were doubled and the same temperature profile was used. The compositions and physical properties of the polymers are summarized in Table 1.

Polymers of the same composition obtained from duplicate runs in Examples 1-2, 3-4, 5-6, 7-8, and 9-10 were combined, compounded with 30 weight % glass fiber, and injection molded into test specimens for the evaluation of their tensile properties (ASTM D638), flexural properties (ASTM D790), notched Izod (ASTM D256), and heat deflection temperatures (ASTM D648). The test specimens were injection molded at a barrel temperature in the range of 330-360°C and a mold temperature of 100°C. The test results are summarized in Table 2.

The polymers in Examples 2-12 were extruded into single filament fibers as described for Example 1. The spinning temperatures ranged from 330-370°C. The fibers were then tested and heat treated under the conditions described for Example 1. The properties of the as-spun and heat-treated fibers are summarized in Table 3.

### Comparative Examples C-1 and C-2

Using essentially the method described in Example 1, a polymer was made from 414 grams (3.0 moles) of 4-hydroxybenzoic acid (HBA), 181.5 grams (0.75 moles) of 4,4'-biphenyldicarboxylic acid (BDA), 41.5 grams (0.25 moles) of terephthalic acid (TA), 186 grams (1.0 moles) of 4,4'-dihydroxybiphenyl (BP), 0.111 grams of potassium acetate and 528.5 grams (99% purity, 5.0 moles) of acetic anhydride.

The inherent viscosity of the polymer was not measured as it was insoluble in a mixture of pentafluorophenol (50 vol.%) and hexafluoroisopropanol (50 vol.%). The melting temperature (Tₘ), heat of melting (ΔHₘ), crystallization temperature on cooling from the molten state (T_{c}), and heat of crystallization (ΔH_{c}) were measured by differential scanning calorimetry (DSC; 20°C/min heating rate). The melt viscosity of the polymer was measured in a capillary viscometer at 360°C at a shear rate of 1000 sec⁻¹. The properties are summarized in Table 1.

The polymer samples of Comparative Examples C-1 and C-2 were combined, compounded with 30% glass fiber, and injection molded into test specimens as described in Examples 1-10. The mechanical properties are summarized in Table 2.

The polymer samples were also melt spun and heat treated using the method of Example 1. The tensile properties of the as-spun and heat-treated fiber are presented in Table 3.

### Comparative Example C-3

A larger batch of polymer was made in a 4 liter flask under the conditions described in Example 1 but using twice the amounts of reactants described in Comparative Examples C-1 and C-2. Fiber samples were made as described previously. The polymer batch was compounded with 30% glass and made into test specimens for the testing of mechanical properties. The results are summarized in Tables 1, 2 and 3.

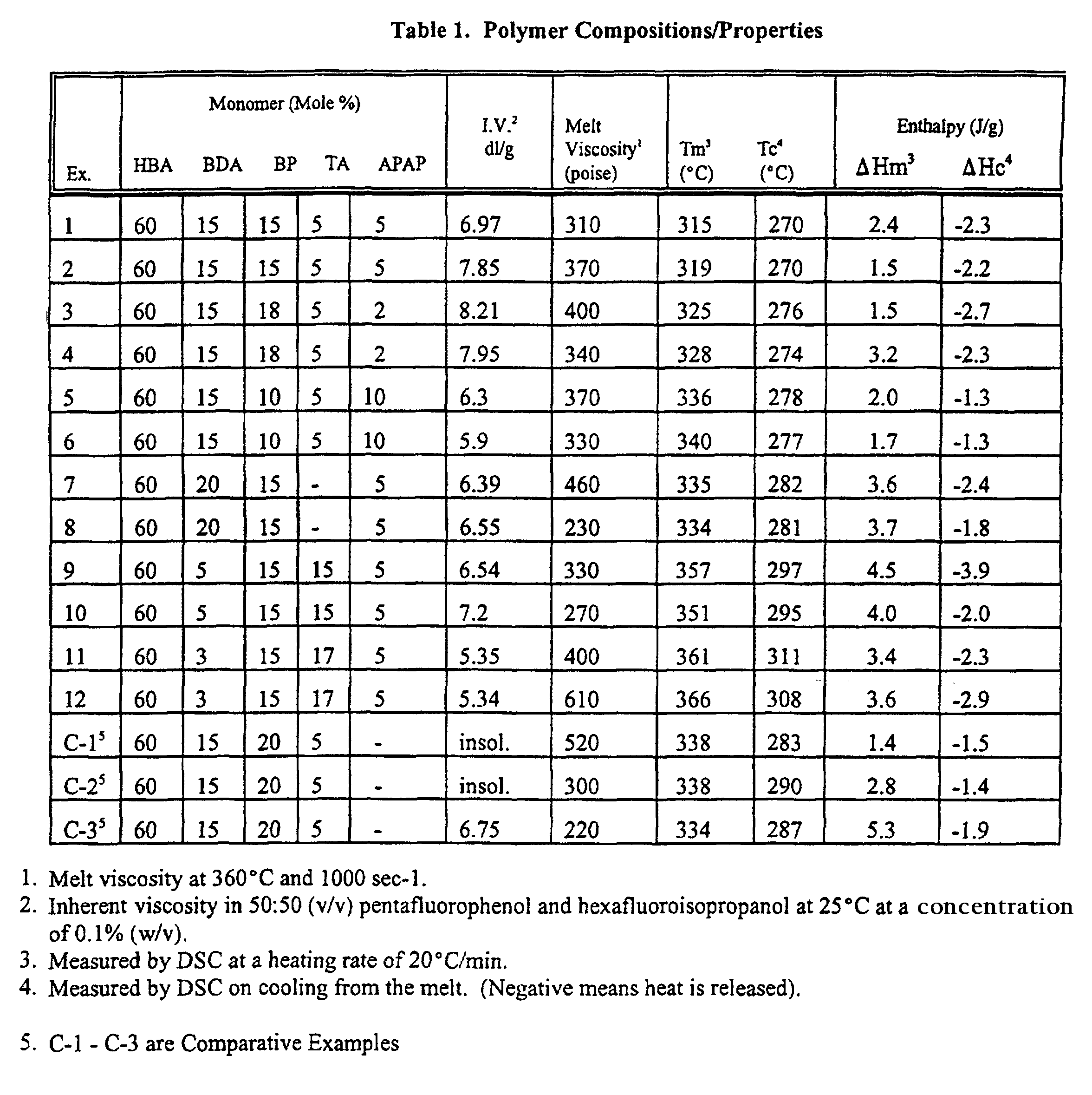

**Table 2:**

| Mechanical properties of glass filled polymers (30% glass fiber) | | | | | | | |
|---|---|---|---|---|---|---|---|
| | HDT (@ 264 psi) (°C) | Tensile Properties Modulus Strength | | | Flexural Properties | | Notched Izod (ft-lb/in.) |
| Example | | Elongation (%) | (Mpsi) | (Kpsi) | Modulus (Mpsi) | Strength (Kpsi) | |
| 1+2 | 265 | 2.48 | 23.72 | 1.82 | 2.17 | 30.1 | 3.23 |
| 3+4 | 260 | 1.89 | 18.8 | 2.1 | 1.76 | 25.1 | 2.52 |
| 5+6 | 266 | 3.24 | 28.1 | 1.65 | 2.46 | 32.2 | 3.53 |
| 7+8 | 279 | 2.13 | 21.02 | 2.03 | 2.06 | 28.9 | 2.72 |
| 9+10 | 284 | 2.16 | 21 | 1.9 | 2.1 | 29 | 3.37 |
| 11+12 | 280 | 2.72 | 24.45 | 1.92 | 2.21 | 27.4 | 3.36 |

| Comparative Examples | | | | | | | |
|---|---|---|---|---|---|---|---|
| C-1 + C-2 | 278 | 2.23 | 21.71 1.78 | | 2.03 | 28.44 | 2.7 |
| C-3 | 267 | 1.9 | 19.1 2 | | 1.6 | 25.7 | 2.1 |
| 1 psi = 6.89476 kPa | | | | | | | |

**Table 3:**

| Fiber Properties | | | | | | |
|---|---|---|---|---|---|---|
| | As Spun | | | Heat Treated | | |
| Example | Tenacity (gpd) | Elongation (%) | Modulus (gpd) | Tenacity (gpd) | Elongation (%) | Modulus (gpd) |
| 1 | 7.7 | 1.5 | 540 | 14.7 | 2.1 | 630 |
| 2 | 8.2 | 1.6 | 560 | 15.9 | 2.1 | 690 |
| 3 | 8.2 | 1.8 | 540 | 20.3 | 2.3 | 820 |
| 4 | 8 | 1.6 | 610 | 14.4 | 1.7 | 810 |
| 5 | 9.3 | 1.7 | 680 | 16.5 | 1.9 | 830 |
| 6 | 7.2 | 1.6 | 530 | 16.6 | 0.8 | 730 |
| 7 | 8.3 | 1.6 | 575 | NM¹ | NM¹ | NM¹ |
| 8 | 6.9 | 1.3 | 610 | 17.7 | 2.4 | 750 |
| 9 | 8.5 | 1.8 | 540 | 21 | 2 | 1000 |
| 10 | 8.3 | 1.8 | 560 | 23.3 | 2.2 | 990 |
| 11 | 6.8 | 1.4 | 540 | 24 | 2.3 | 950 |
| 12 | 6.6 | 1.3 | 550 | 23.4 | 2.8 | 880 |

| Comparative Examples | | | | | | |
|---|---|---|---|---|---|---|
| C-1 | 3.6 | 1 | 430 | 5.6 | 0.9 | 630 |
| C-2 | 6.7 | 1.3 | 540 | 13.7 | 1.7 | 730 |
| C-3 | 6.4 | 1.3 | 540 | 16.4 | 1.7 | 930 |

| | | | | | | |
|---|---|---|---|---|---|---|
| 1. Not Measured. | | | | | | |

### Example 13

A polymer was prepared using the same method as in Example 1, using as monomers 4-hydroxybenzoic acid (60 mole %), 4,4'-biphenyldicarboxylic acid (15 mole %), terephthalic acid (5 mole %), 1,4-hydroquinone (15 mole %) and 4-hydroxyacetanilide (5 mole %). The reaction mixture solidified as polymerization proceeded rather than yielding a molten polymer and was discarded.

## Claims

1. A thermotropic aromatic poly(esteramide) comprising monomer units A, B, C and D, wherein said monomer unit A is 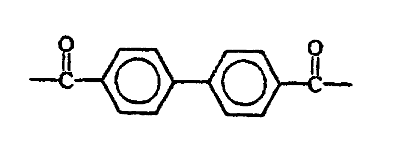 and one or more optional dioyl residues of aromatic diacids selected from the group consisting of terephthalic acid, and isophthalic acid; and
said monomer unit B is the dioxy residue of one or more aromatic diols selected from the group consisting of 1,4-hydroquinone, 4,4'-biphenol, 2,6-dihydroxynaphthalene, and 2,7-dihydroxynaphthalene;
C is 4-oxybenzoyl;
D is 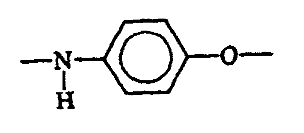 wherein some or all of the aromatic groups of said monomer units A, B; C, and D are optionally substituted with one or more moieties selected from the group consisting of F, Cl, Br, I, and C₁ to C₄ alkyl groups that may be partially or fully substituted with Cl, F, and mixtures, thereof;
wherein said poly(esteramide) comprises on a molar basis 1 to 45 % of said monomer unit A, 1 to 45 % of said monomer unit B, 10 to 95 % of said monomer unit C, and 1 to 30 % of said monomer unit D;
wherein said poly(esteramide) forms a liquid crystalline melt at a temperature greater than or equal to 200 °C and less than or equal to 400 °C.

2. The thermotropic aromatic poly(esteramide) as recited in claim 1, said poly(esteramide) comprising on a molar basis 3 to 30% of said monomer unit A, 3 to 30% of monomer unit B, 40 to 90% of said monomer unit C, and 1 to 20% of said monomer unit D.

3. The thermotropic aromatic poly(esteramide) as recited in claim 1 said poly(esteramide) comprising on a molar basis 10 to 30% of said monomer unit A, 5 to 25% of said monomer unit B, 50 to 80% of said monomer unit C, and 5 to 15% of said monomer unit D.

4. The thermotropic aromatic poly(esteramide) as recited in claim 2, wherein said poly(esteramide) forms a liquid crystalline melt at a temperature of at least 250 °C and less than or equal to 375 °C.

5. The thermotropic aromatic poly(esteramide), as recited in claim 3, wherein said monomer unit A is comprised of 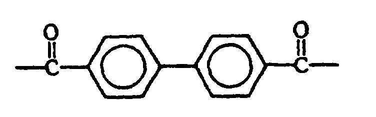 and optional terephthaloyl, said terephthaloyl comprising up to 25 mole % of the monomer units of said poly(esteramide); and
wherein said monomer unit B is comprised of the dioxy residue of 4,4'-biphenol and optional 1,4-hydroquinone, said dioxy residue of 1,4-hydroquinone comprising up to 20 mole % of the monomer units of said poly(esteramide).

6. The thermotropic aromatic poly(esteramide) as recited in claim 3, wherein said monomer unit A comprises 2 to 25% of 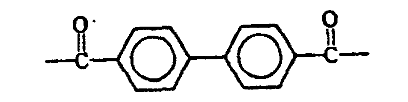 and 2 to 25% of terephthaloyl, expressed as a mole % of the monomer units of said poly(esteramide);
wherein said monomer unit B is the dioxy residue of 4,4'-biphenol; and
wherein said monomer unit C is 4-oxybenzoyl.

7. A shaped article comprising the thermotropic aromatic poly(esteramide) recited in claim 1.

8. A fiber comprising the thermotropic aromatic poly(esteramide) recited in claim 1.

9. A shaped article comprising the thermotropic aromatic poly(esteramide) recited in claim 5.

## Patentansprüche

1. Thermotropes aromatisches Polyesteramid, das Monomereinheiten A, B, C und D umfasst, wobei es sich bei der Monomereinheit A um 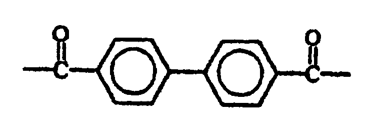 und gegebenenfalls einen oder mehrere Dioylreste von aromatischen Disäuren, die aus der Gruppe ausgewählt sind, die aus Terephthalsäure und Isophthalsäure besteht, handelt; und
die Monomereinheit B der Dioxyrest von einem oder mehreren aromatischen Diolen ist, die aus der Gruppe ausgewählt sind, die aus 1,4-Hydrochinon, 4,4'-Biphenol, 2,6-Dihydroxynaphthalin und 2,7-Dihydroxynaphthalin besteht;
C 4-Oxybenzoyl ist;
D 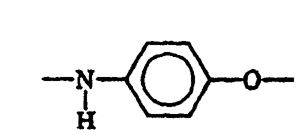 ist, wobei einige oder alle aromatischen Gruppen der Monomereinheiten A, B, C und D gegebenenfalls mit einer oder mehreren Struktureinheiten substituiert sind, die aus der Gruppe ausgewählt sind, die aus F, Cl, Br, I und C₁- bis C₄-Alkylgruppen, die teilweise oder vollständig mit Cl, F und Gemischen davon substituiert sein können, besteht;
wobei das Polyesteramid 1 bis 45 Mol-% der Monomereinheit A, 1 bis 45 Mol-% der Monomereinheit B, 10 bis 95 Mol-% der Monomereinheit C und 1 bis 30 Mol-% der Monomereinheit D umfasst;
wobei das Polyesteramid bei einer Temperatur von größer oder gleich 200 °C und kleiner oder gleich 400 °C eine flüssigkristalline Schmelze bildet.

2. Thermotropes aromatisches Polyesteramid gemäß Anspruch 1, wobei das Polyesteramid 3 bis 30 Mol-% der Monomereinheit A, 3 bis 30 Mol-% der Monomereinheit B, 40 bis 90 Mol-% der Monomereinheit C und 1 bis 20 Mol-% der Monomereinheit D umfasst.

3. Thermotropes aromatisches Polyesteramid gemäß Anspruch 1, wobei das Polyesteramid 10 bis 30 Mol-% der Monomereinheit A, 5 bis 25 Mol-% der Monomereinheit B, 50 bis 80 Mol-% der Monomereinheit C und 5 bis 15 Mol-% der Monomereinheit D umfasst.

4. Thermotropes aromatisches Polyesteramid gemäß Anspruch 2, wobei das Polyesteramid bei einer Temperatur von wenigstens 250 °C und kleiner oder gleich 375 °C eine flüssigkristalline Schmelze bildet.

5. Thermotropes aromatisches Polyesteramid gemäß Anspruch 3, wobei die Monomereinheit A aus 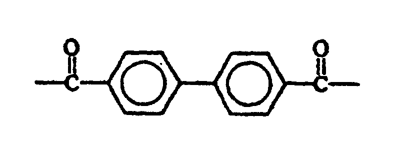 und gegebenenfalls Terephthaloyl besteht, wobei das Terephthaloyl bis zu 25 Mol-% der Monomereinheiten des Polyesteramids umfasst; und
wobei die Monomereinheit B aus dem Dioxyrest von 4,4'-Biphenol und gegebenenfalls 1,4-Hydrochinon besteht, wobei der Dioxyrest von 1,4-Hydrochinon bis zu 20 Mol-% der Monomereinheiten des Polyesteramids umfasst.

6. Thermotropes aromatisches Polyesteramid gemäß Anspruch 3, wobei die Monomereinheit A 2 bis 25% 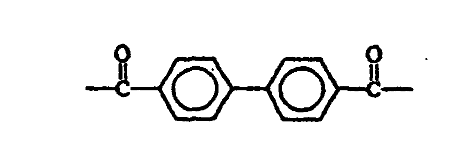 und 2 bis 25% Terephthaloyl umfasst, ausgedrückt als Mol-% der Monomereinheiten des Polyesteramids;
wobei es sich bei der Monomereinheit B um den Dioxyrest von 4,4'-Biphenol handelt; und
wobei die Monomereinheit C 4-Oxybenzoyl ist.

7. Formartikel, der das thermotrope aromatische Polyesteramid gemäß Anspruch 1 umfasst.

8. Faser, die das thermotrope aromatische Polyesteramid gemäß Anspruch 1 umfasst.

9. Formartikel, der das thermotrope aromatische Polyesteramid gemäß Anspruch 5 umfasst.

## Revendications

1. Poly(esteramide) aromatique thermotrope comprenant les motifs monomères A, B, C et D, dans lequel ledit motif monomère A représente 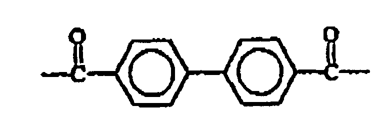 et un ou plusieurs résidus diolyle facultatifs de diacides aromatiques choisis dans le groupe consistant en l'acide téréphtalique et l'acide isophtalique ; et
ledit motif monomère B est le résidu dioxy d'un ou plusieurs diols aromatiques choisis dans le groupe consistant en la 1,4-hydroquinone, le 4,4'-biphénol, le 2,6-dihydroxynaphtalène et le 2,7-dihydroxynaphtalène;
C représente un groupe 4-oxybenzoyle ;
D représente un groupe 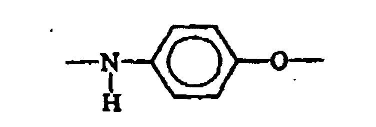 une partie ou la totalité des groupes aromatiques desdits motifs monomères A, B, C et D étant facultativement substituée avec un ou plusieurs groupements choisis dans le groupe consistant en des groupes F, Cl, Br, I et alkyle en C₁ à C₄ qui peuvent être partiellement ou totalement substitués avec Cl, F et leurs mélanges ;
ledit poly(esteramide) comprenant, sur base molaire, 1 à 45 % dudit motif monomère A, 1 à 45 % dudit motif monomère B, 10 à 95 % dudit motif monomère C et 1 à 30 % dudit motif monomère D ;
ledit poly(esteramide) formant un cristal liquide en masse fondue à une température supérieure ou égale à 200°C et inférieure ou égale à 400°C.

2. Poly(esteramide) aromatique thermotrope suivant la revendication 1, ledit poly(esteramide) comprenant, sur base molaire, 3 à 30 % du motif monomère A, 3 à 30 % du motif monomère B, 40 à 90 % du motif monomère C et 1 à 20 % du motif monomère D.

3. Poly(esteramide) aromatique thermotrope suivant la revendication 1, ledit poly(esteramide) comprenant, sur base molaire, 10 à 30 % du motif monomère A, 5 à 25 % du motif monomère B, 50 à 80 % du motif monomère C et 5 à 15 % du motif monomère D.

4. Poly(esteramide) aromatique thermotrope suivant la revendication 2, ledit poly(esteramide) formant un cristal liquide en masse fondue à une température d'au moins 250°C et inférieure ou égale à 375°C.

5. Poly(esteramide) aromatique thermotrope suivant la revendication 3, dans lequel le motif monomère A est constitué d'un groupe 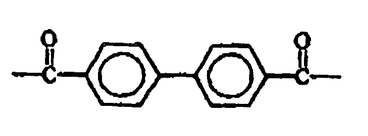 et d'un groupe téréphtaloyle facultatif, ledit groupe téréphtaloyle représentant jusqu'à 25 % en moles de motifs monomères dudit poly(esteramide) ; et
dans lequel le motif monomère B est constitué du résidu dioxy du 4,4'-biphénol et facultativement de la 1,4-hydroquinone, ledit résidu dioxy de la 1,4-hydroquinone représentant jusqu'à 20 % en moles des motifs monomères dudit poly(esteramide).

6. Poly(esteramide) aromatique thermotrope suivant la revendication 3, dans lequel le motif monomère A comprend 2 à 25 % du groupe 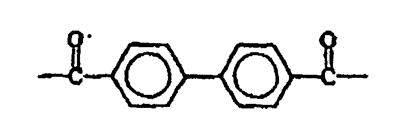 et 2 à 25 % du groupe téréphtaloyle, les quantités étant exprimées en % en moles de motifs monomères dudit poly(esteramide) ;
le motif monomère B est le résidu dioxy du 4,4'-biphénol ; et
le motif monomère C est un motif 4-oxybenzoyle.

7. Article façonné comprenant le poly(esteramide) aromatique thermotrope suivant la revendication 1.

8. Fibre comprenant le poly(esteramide) aromatique thermotrope suivant la revendication 1.

9. Article façonné comprenant le poly(esteramide) aromatique thermotrope suivant la revendication 5.
